# EUROPEAN PATENT SPECIFICATION

(11) **EP 4 332 037 B1**
(45) Date of publication and mention of the grant of the patent: **12.11.2025**
(21) Application number: 22210455.6
(22) Date of filing: 30.11.2022
(51) Int. Cl.: B66B 1/30

(54) **MULTIPLE DRIVE SYSTEM FOR REGENERATIVE ENERGY MANAGEMENT IN AN ELEVATOR INSTALLATION**
MEHRFACHANTRIEBSSYSTEM FÜR REGENERATIVES ENERGIEMANAGEMENT IN EINER AUFZUGSANLAGE
SYSTÈME D'ENTRAÎNEMENT MULTIPLE POUR LA GESTION DE L'ÉNERGIE RÉGÉNÉRATIVE DANS UNE INSTALLATION D'ASCENSEUR

(30) Priority: 02.09.2022 US 202217901933
(43) Date of publication of application: 06.03.2024
(73) Proprietor: OTIS Elevator Company, Farmington, CT 06032 (US)
(72) Inventor: MILLETT, Steven, Michael, Farmington, CT 06032 (US)
(74) Representative: Dehns

(56) References cited:
- WO-A1-2012/134363
- US-A1- 2008 185 234
- US-A1- 2008 283 341
- US-A1- 2009 218 175

## Description

### BACKGROUND

Elevator systems typically include a car that moves vertically between different levels in a building. An elevator machine consumes electrical power to propel the elevator car under certain circumstances. Sometimes the desired movement of the elevator car can be accomplished using gravity and the elevator machine can operate as a generator providing regenerative electrical power.

While regenerative electrical power is considered desirable to reduce energy consumption, the resulting energy has to be consumed or stored. One approach includes adding large resistor load banks to the power lines to absorb excess energy. Adding such resistors introduces additional cost and results in absorbing more energy than necessary, which is considered wasteful.

US 2009/0218175 A1 discloses a power system that operates a plurality of hoist motors. Each hoist motor controls movement of one of a plurality of elevators. A controller manages power on a power bus to drive a motoring hoist motor with power delivered to the power bus by generating hoist motors.

### SUMMARY

Embodiments of an elevator energy management system are provided according to claim 1.

In some examples, the amount of regenerative energy to be received by the second variable frequency drive is less than the amount of regenerative energy received by the first variable frequency drive.

In some examples, the second variable frequency drive controls an amount of regenerative power received by the second variable frequency drive according to the indication of the amount of regenerative energy to be received by the second variable frequency drive.

In some examples, the second variable frequency drive is configured to determine an amount of regenerative energy to be received from the first variable frequency drive during the second operating condition.

In some examples, the at least one energy receiving device comprises an energy storage device configured to receive regenerative energy from the second variable frequency drive.

In some examples, the energy storage device comprises a battery.

In some examples, the energy storage device comprises a flywheel.

In some examples, the at least one energy receiving device comprises at least one energy dissipation component.

In some examples, the at least one energy dissipation component comprises a resistive load.

In some examples, the second variable frequency drive is configured to selectively deliver electrical power to the first variable frequency drive.

Embodiment of a method of managing energy in an elevator system are provided according to claim 10.

In some examples, the method includes controlling the amount of regenerative energy received by the second variable frequency drive to be less than the amount of regenerative energy received by the first variable frequency drive.

In some examples, the method includes controlling an amount of regenerative power received by the second variable frequency drive according to the indication of the amount of regenerative energy to be received by the second variable frequency drive.

In some examples, the second variable frequency drive determines an amount of regenerative energy to be received by the second variable frequency drive from the first variable frequency drive during the second operating condition.

In some examples, the at least one energy receiving device comprises a energy storage device configured to receive regenerative energy from the second variable frequency drive.

In some examples, the energy storage device comprises a battery.

In some examples, the energy storage device comprises a flywheel.

In some examples, the at least one energy receiving device comprises at least one energy dissipation component.

In some examples, the at least one energy dissipation component comprises a resistive load.

In some examples, the method comprises selectively delivering electrical power through the second variable frequency drive to the first variable frequency drive.

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 diagrammatically illustrates selected portions of an example elevator system.
Figure 2 schematically illustrates an example embodiment of a multiple drive system.
Figure 3 is a flow chart diagram summarizing an example energy management process.

### DETAILED DESCRIPTION

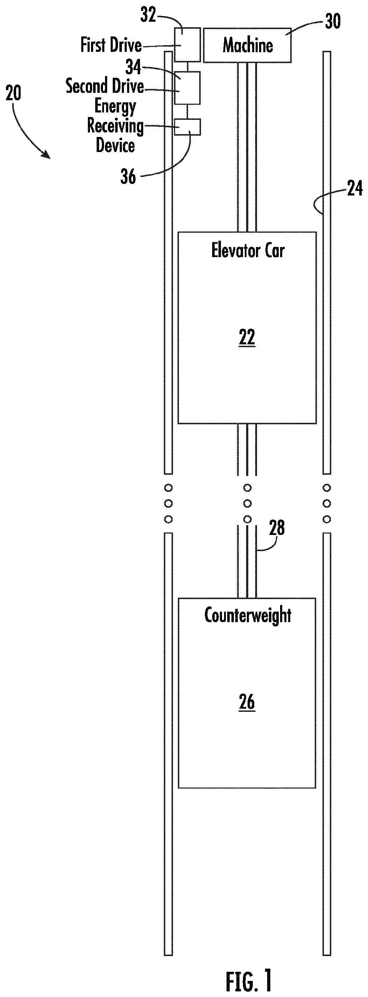

Figure 1 schematically illustrates selected portions of an elevator system 20. An elevator car 22 moves vertically within a hoistway 24. In the illustrated example embodiment, a counterweight 26 is coupled with the elevator car 22 by elevator roping 28, which may include round ropes or flat belts, for example. While a traction-driven elevator system is shown for discussion purposes, the particular configuration of the elevator system 20 may vary from that which is shown.

An elevator machine 30 controls movement of the elevator car 22. The machine 30 includes a motor to propel the elevator car 22 as needed. The machine 30 also includes a brake that holds the elevator car 22 in a selected position, such as at a landing where passengers desire to enter or exit the elevator car 22.

A first variable frequency drive 32 is configured to deliver electrical power to the machine 30 during a first operating condition in which the motor of the machine 30 requires power for moving the elevator car 22. The first variable frequency drive 32 is also configured to receive regenerative energy from the elevator machine 30 during a second operating condition in which the motor of the machine 30 produces regenerative energy.

For example, the second operating condition occurs during movement of the elevator car 22 that results from taking advantage of gravity. One such example second operating condition includes moving the elevator car upward when the car is empty. Under such conditions, gravity pulls the counterweight 26 down resulting in the elevator car 22 moving upward because the mass of the counterweight 26 is greater than the mass of the empty elevator car 22. In a second operating condition that takes advantage of gravity for moving the elevator car 22, the motor of the elevator machine 30 acts as an electrical generator producing regenerative energy. Another example second operating condition occurs when the elevator decelerates and the motor regenerates electricity due to system mass and inertia. The first variable frequency drive 32 receives such regenerative energy from the elevator machine 30 and is configured to deliver it to the associated electrical grid so it can be used to power other loads, for example.

A second variable frequency drive 34 is configured to selectively receive at least some of the regenerative energy from the first variable frequency drive 32 during the second operating condition. The second operating drive 34 is configured to deliver regenerative energy to at least one energy receiving device 36 that is electrically coupled with the second variable frequency drive 34, such as through conventional wiring.

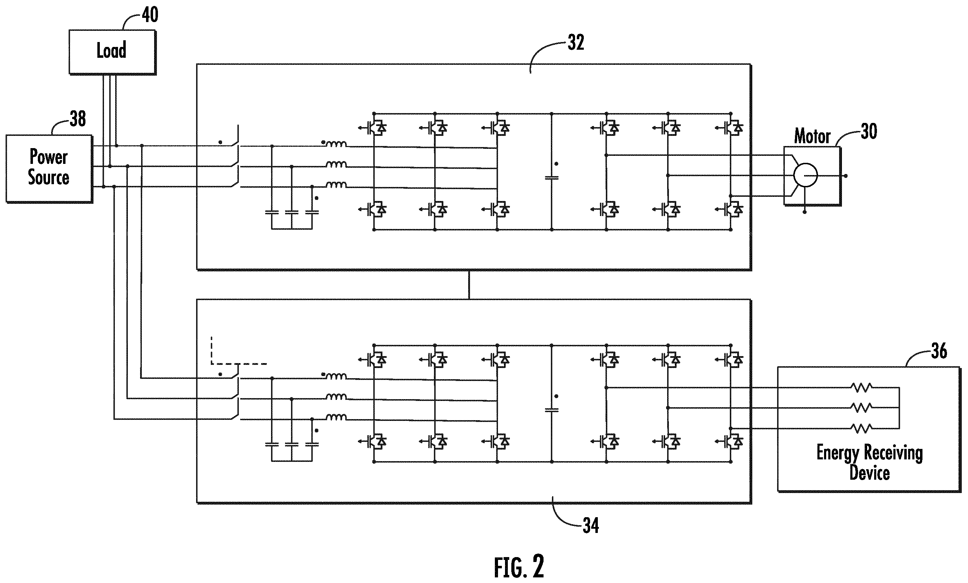

Figure 2 schematically illustrates an example configuration of the first variable frequency drive 32 and the second variable frequency drive 34. In this example embodiment, the second variable frequency drive 34 has the same components and arrangement as the first variable frequency drive 32. The example second variable frequency drive 34 is capable of two-way energy reception and delivery. In other embodiments, the second variable frequency drive is configured for one-way energy reception and delivery. The particular components within the second variable frequency drive 34 may be varied to meet the needs of a particular installation.

As shown in Figure 2, a power source 38, such as a utility grid or a local uninterruptable power supply, provides electrical power that is delivered by the first variable frequency drive 32 to the motor of the elevator machine 30 during the first operating condition, which is when electrical power is needed for moving the elevator car 22. In some embodiments, the power source 38 provides three-phase electrical power. During a second operating condition, such as that mentioned above, in which the first variable frequency drive 32 receives regenerative energy from the elevator machine 30, the system shown in Figure 2 is configured for managing such energy in an efficient and economical manner.

The second variable frequency drive 34 selectively receives at least some of the regenerative energy from the first variable frequency drive 32. The second variable frequency drive 34 delivers regenerative energy that it receives to the energy receiving device 36. In the example of Figure 2, the energy receiving device 36 includes at least one energy dissipating component, such as a resistor for absorbing excess regenerative energy in the system. Other configurations of an energy receiving device 36 are included in other embodiments. For example, instead of a three-phase load as schematically shown in the illustration, the energy receiving device 36 can be a single component connected to two of the output phases of the second drive 34 or a component connected between one of the output phases and a DC bus.

In another example embodiment, the energy receiving device 36 has energy storage capability and includes a rechargeable battery, a flywheel, or a supercapacitor. The second variable frequency drive 34 in such embodiments is configured for bi-directional power flow. The energy stored by the energy receiving device 36 may be provided to other portions of the electrical grid including the first variable frequency drive 32 or other portions of elevator system 20 through the second variable frequency drive 34 under appropriate circumstances.

The amount of regenerative energy received by the second variable frequency drive 34 and delivered to the energy receiving device 36 can be selectively controlled to achieve a desired power balance within the overall system. Some of the regenerative energy received by the first variable frequency drive 32 may be fed back to the power source 38 under appropriate circumstances. For example, when the power source 38 is a utility grid that is capable of receiving energy, at least some of the regenerative energy may be delivered to the power source 38. Another load 40, show schematically in Figure 2, may receive and utilize at least some of the regenerative energy. The load 40 may be another device that is part of the elevator system 20, another elevator, or a device that is located at or near the site of the elevator system 20, such as lighting or a building climate control system. The load 40 may use some of the regenerative energy, store such energy, or absorb it, depending on the configuration of the load 40

The first variable frequency drive 32, the second variable frequency drive 34, or both includes control logic, an application specific integrated circuit (ASIC), or a processor for selectively controlling the amount of regenerative energy received by the second variable frequency drive 34. In one example embodiment, the first variable frequency drive 32 tracks or measures the regenerative power received by the first variable frequency drive 32 and communicates with the second variable frequency drive 34 to provide an indication to the second variable frequency drive 34 to receive regenerative power. In some such embodiments, the second variable frequency drive 34 is responsive to the first variable frequency drive 32 and receives regenerative energy until the first variable frequency drive 32 provides an indication to stop receiving such energy. In other example embodiments, the second variable frequency drive 34 is configured to determine when to receive regenerative energy and how much regenerative energy to receive.

The second variable frequency drive 34 adjusts an amount of regenerative energy that is otherwise within the system to be absorbed by the load 40, the power source 38, or both. Real time communications between the first variable frequency drive 32 and the second variable frequency drive 34 allows for managing where the regenerative energy in the system is delivered to accommodate a variety of second operating conditions and varying amounts of regenerative power produced by the motor of the elevator machine 30.

A one-to-one relationship between the variable frequency drives and an elevator is illustrated and described above for discussion purposes. Other embodiments include drives configured for group control. For example, an embodiment includes a second variable frequency drive 34 configured to receive energy from at least two elevators, which may be in a second operating condition at the same time. Alternatively, group elevator control may be included so that such a second variable frequency drive 34 receives regenerative energy from only one of the elevators at any given time.

The disclosed example embodiment and others like it accommodate the widely varying elevator system power requirements without requiring undesirably expensive resistor load banks to absorb excess energy, for example. An energy management system like that described above accommodates regenerative energy in an effective manner during elevator installation and in situations where there is minimal additional load to which the regenerative energy may otherwise be directed. Controlling the second variable frequency drive 34 to selectively receive regenerative energy from the first variable frequency drive 32 customizes the manner in which regenerative energy is handled within the system in a flexible and economical manner.

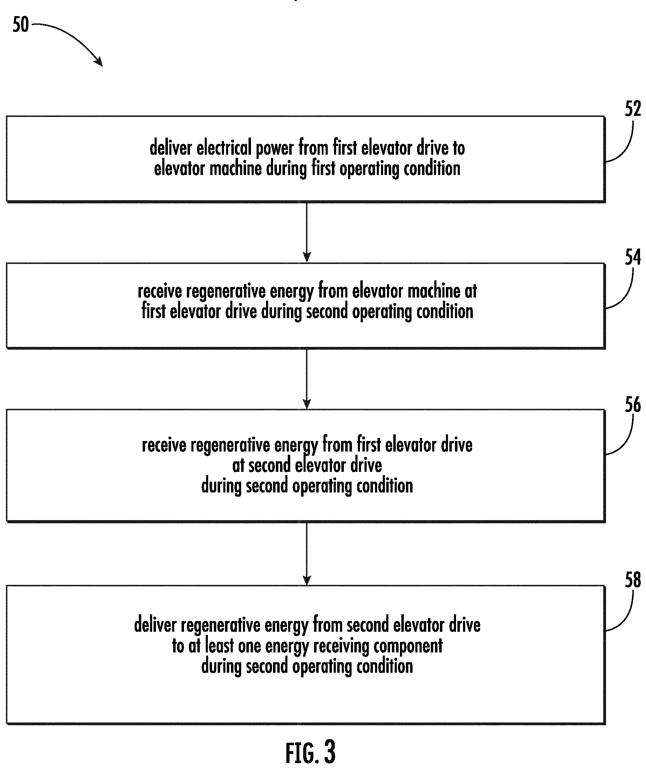

Figure 3 is a flow chart diagram summarizing an example energy management process 50. In a step 52, electrical power is delivered from the first elevator drive to the elevator machine during the first operating condition. In a step 54, regenerative energy is received at the first elevator drive from the elevator machine during the second operating condition. In a step 56, regenerative energy is received at the second elevator drive from the first elevator drive during the second operating condition. In a step 58, regenerative energy is delivered from the second energy drive to at least one energy receiving component during the second operating condition.

The various features of the disclosed example embodiments are not necessarily limited to those embodiments. Other combinations of such features are possible to realize additional or different embodiments.

The preceding description is exemplary rather than limiting in nature. Variations and modifications to the disclosed examples may become apparent to those skilled in the art that do not necessarily depart from the scope of the claims. The scope of legal protection given to this invention is determined by the following claims.

## Claims

1. An elevator energy management system, comprising:
a first variable frequency drive (32) configured to deliver electrical power from a power source (38) to an elevator machine (30) during a first operating condition and to receive regenerative energy from the elevator machine (30) during a second operating condition;
a second variable frequency (34) drive configured to selectively receive regenerative energy from the first variable frequency drive (32) during the second operating condition; and
at least one energy receiving device (36) coupled with the second variable frequency drive (34), the at least one energy receiving device (36) being configured to receive regenerative energy from the second variable frequency drive (34);
**characterized in that** the second variable frequency drive (34) is configured to communicate with the first variable frequency drive (32) to receive an indication of at least an amount of regenerative energy received by the first variable frequency drive (32) or an amount of regenerative energy to be received by the second variable frequency drive (34) during the second operating condition.

2. The elevator energy management system of claim 1, wherein the second variable frequency drive (34) controls an amount of regenerative power received by the second variable frequency drive (34) according to the indication of the amount of regenerative energy to be received by the second variable frequency drive (34).

3. The elevator energy management system of any preceding claim, wherein the amount of regenerative energy to be received by the second variable frequency drive (34) is less than the amount of regenerative energy received by the first variable frequency drive (32).

4. The elevator energy management system of any preceding claim, wherein the second variable frequency drive (34) is configured to determine an amount of regenerative energy to be received from the first variable frequency drive (32) during the second operating condition.

5. The elevator energy management system of any preceding claim, wherein the at least one energy receiving device (36) comprises an energy storage device configured to receive regenerative energy from the second variable frequency drive (34).

6. The elevator energy management system of claim 5, wherein the energy storage device comprises a battery and/or a flywheel.

7. The elevator energy management system of any preceding claim, wherein the at least one energy receiving device (36) comprises at least one energy dissipation component.

8. The elevator energy management system of claim 7, wherein the at least one energy dissipation component comprises a resistive load.

9. The elevator energy management system of any preceding claim, wherein the second variable frequency drive (34) is configured to selectively deliver electrical power to the first variable frequency drive (32).

10. A method (50) of managing energy in an elevator system, the method comprising:
Delivering (52) electrical power from a power source (38) to an elevator machine (30) through a first variable frequency drive (32) during a first operating condition;
Receiving (54) regenerative energy from the elevator machine (30) at the first variable frequency drive (32) during a second operating condition;
Receiving (56) at least some of the regenerative energy from the first variable frequency drive (32) at a second variable frequency drive (34) during the second operating condition; and
Delivering (58) regenerative energy received by the second variable frequency drive (34) to at least one energy receiving device (36) coupled with the second variable frequency drive (34);
**Characterized in that** the method comprises communicating between the first variable frequency drive (32) and the second variable frequency drive (34) to provide the second variable frequency drive (34) an indication of at least an amount of regenerative energy received by the first variable frequency drive (32) or an amount of regenerative energy to be received by the second variable frequency drive (34) during the second operating condition.

11. The method (50) of claim 10, comprising controlling an amount of regenerative power received by the second variable frequency drive (34) according to the indication of the amount of regenerative energy to be received by the second variable frequency drive (34).

12. The method (50) of claim 10 or 11, comprising controlling the amount of regenerative energy received by the second variable frequency drive (34) to be less than the amount of regenerative energy received by the first variable frequency drive (32).

13. The method (50) of any of claims 10 to 12, comprising selectively delivering electrical power through the second variable frequency drive (34) to the first variable frequency drive (32).

## Patentansprüche

1. Aufzugsenergiemanagementsystem, umfassend:
einen ersten Frequenzumrichter (32), der dazu konfiguriert ist, während eines ersten Betriebszustands elektrische Energie von einer Energiequelle (38) an eine Aufzugsmaschine (30) zu liefern und während eines zweiten Betriebszustands regenerative Energie von der Aufzugsmaschine (30) zu empfangen;
einen zweiten Frequenzumrichter (34), der dazu konfiguriert ist, während des zweiten Betriebszustands selektiv regenerative Energie von dem ersten Frequenzumrichter (32) zu empfangen; und
mindestens eine Energieempfangsvorrichtung (36), die mit dem zweiten Frequenzumrichter (34) gekoppelt ist, wobei die mindestens eine Energieempfangsvorrichtung (36) dazu konfiguriert ist, regenerative Energie von dem zweiten Frequenzumrichter (34) zu empfangen;
**dadurch gekennzeichnet, dass** der zweite Frequenzumrichter (34) dazu konfiguriert ist, mit dem ersten Frequenzumrichter (32) zu kommunizieren, um eine Indikation von mindestens einer Menge regenerativer Energie zu empfangen, die von dem ersten Frequenzumrichter (32) empfangen wird, oder einer Menge regenerativer Energie, die von dem zweiten Frequenzumrichter (34) während des zweiten Betriebszustands empfangen werden soll, zu empfangen.

2. Aufzugsenergiemanagementsystem nach Anspruch 1, wobei der zweite Frequenzumrichter (34) eine Menge an regenerativer Energie steuert, die von dem zweiten Frequenzumrichter (34) empfangen wird, gemäß der Indikation der Menge an regenerativer Energie, die von dem zweiten Frequenzumrichter (34) empfangen werden soll.

3. Aufzugsenergiemanagementsystem nach einem der vorhergehenden Ansprüche, wobei die Menge an regenerativer Energie, die von dem zweiten Frequenzumrichter (34) empfangen werden soll geringer ist als die von dem ersten Frequenzumrichter (32) empfangene Menge an regenerativer Energie.

4. Aufzugsenergiemanagementsystem nach einem der vorhergehenden Ansprüche, wobei der zweite Frequenzumrichter (34) dazu konfiguriert ist, eine Menge an regenerativer Energie zu bestimmen, die während des zweiten Betriebszustands von dem ersten Frequenzumrichter (32) empfangen werden soll.

5. Aufzugsenergiemanagementsystem nach einem der vorhergehenden Ansprüche, wobei die mindestens eine Energieempfangsvorrichtung (36) eine Energiespeichervorrichtung umfasst, die dazu konfiguriert ist, regenerative Energie von dem zweiten Frequenzumrichter (34) zu empfangen.

6. Aufzugsenergiemanagementsystem nach Anspruch 5, wobei die Energiespeichervorrichtung eine Batterie und/oder ein Schwungrad umfasst.

7. Aufzugsenergiemanagementsystem nach einem der vorhergehenden Ansprüche, wobei die mindestens eine Energieempfangsvorrichtung (36) mindestens eine Energieableitungskomponente umfasst.

8. Aufzugsenergiemanagementsystem nach Anspruch 7, wobei die mindestens eine Energieableitungskomponente eine ohmsche Last umfasst.

9. Aufzugsenergiemanagementsystem nach einem der vorhergehenden Ansprüche, wobei der zweite Frequenzumrichter (34) dazu konfiguriert ist, selektiv elektrische Energie an den ersten Frequenzumrichter (32) zu liefern.

10. Verfahren (50) zum Energiemanagement in einem Aufzugssystem, das Verfahren umfassend:
Liefern (52) von elektrischer Energie von einer Energiequelle (38) zu einer Aufzugsmaschine (30) über einen ersten Frequenzumrichter (32) während eines ersten Betriebszustands;
Empfangen (54) von regenerativer Energie von der Aufzugsmaschine (30) an dem ersten Frequenzumrichter (32) während eines zweiten Betriebszustands;
Empfangen (56) mindestens eines Teils der regenerativen Energie von dem ersten Frequenzumrichter (32) an einem zweiten Frequenzumrichter (34) während des zweiten Betriebszustands; und
Liefern (58) der von dem zweiten Frequenzumrichter (34) empfangenen regenerativen Energie an mindestens eine mit dem zweiten Frequenzumrichter (34) gekoppelte Energieempfangsvorrichtung (36);
**dadurch gekennzeichnet, dass** das Verfahren ein Kommunizieren zwischen dem ersten Frequenzumrichter (32) und dem zweiten Frequenzumrichter (34) umfasst, um dem zweiten Frequenzumrichter (34) eine Indikation mindestens einer Menge an regenerativer Energie, die von dem ersten Frequenzumrichter (32) empfangen wird, oder einer Menge an regenerativer Energie, die von dem zweiten Frequenzumrichter (34) während des zweiten Betriebszustands empfangen werden soll, bereitzustellen.

11. Verfahren (50) nach Anspruch 10, umfassend ein Steuern einer von dem zweiten Frequenzumrichter (34) empfangenen Menge regenerativer Energie gemäß der Indikation der Menge regenerativer Energie, die von dem zweiten Frequenzumrichter (34) empfangen werden soll.

12. Verfahren (50) nach Anspruch 10 oder 11, umfassend das Steuern der Menge regenerativer Energie, die von dem zweiten Frequenzumrichter (34) empfangen wird, so dass sie geringer ist als die Menge regenerativer Energie, die von dem ersten Frequenzumrichter (32) empfangen wird.

13. Verfahren (50) nach einem der Ansprüche 10 bis 12, umfassend selektives Liefern von elektrischer Energie über den zweiten Frequenzumrichter (34) an den ersten Frequenzumrichter (32).

## Revendications

1. Système de gestion d'énergie d'ascenseur comprenant :
un premier variateur de fréquence (32) configuré pour fournir de l'énergie électrique à partir d'une source d'alimentation (38) à une machine d'ascenseur (30) pendant une première condition de fonctionnement et pour recevoir de l'énergie régénérative à partir de la machine d'ascenseur (30) pendant une seconde condition de fonctionnement ;
un second variateur de fréquence (34) configuré pour recevoir sélectivement de l'énergie régénérative du premier variateur de fréquence (32) pendant la seconde condition de fonctionnement ; et
au moins un dispositif de réception d'énergie (36) couplé au second variateur de fréquence (34), le au moins un dispositif de réception d'énergie (36) étant configuré pour recevoir de l'énergie régénérative du second variateur de fréquence (34) ;
**caractérisé en ce que** le second variateur de fréquence (34) est configuré pour communiquer avec le premier variateur de fréquence (32) pour recevoir une indication d'au moins une quantité d'énergie régénérative reçue par le premier variateur de fréquence (32) ou une quantité d'énergie régénérative à recevoir par le second variateur de fréquence (34) pendant la seconde condition de fonctionnement.

2. Système de gestion d'énergie d'ascenseur selon la revendication 1, dans lequel le second variateur de fréquence (34) commande une quantité d'énergie régénérative reçue par le second variateur de fréquence (34) en fonction de l'indication de la quantité d'énergie régénérative à recevoir par le second variateur de fréquence (34).

3. Système de gestion d'énergie d'ascenseur selon une quelconque revendication précédente, dans lequel la quantité d'énergie régénérative à recevoir par le second variateur de fréquence (34) est inférieure à la quantité d'énergie régénérative reçue par le premier variateur de fréquence (32).

4. Système de gestion d'énergie d'ascenseur selon une quelconque revendication précédente, dans lequel le second variateur de fréquence (34) est configuré pour déterminer une quantité d'énergie régénérative reçue par le premier variateur de fréquence (32) pendant la seconde condition de fonctionnement.

5. Système de gestion d'énergie d'ascenseur selon une quelconque revendication précédente, dans lequel le au moins un dispositif de réception d'énergie (36) comprend un dispositif de stockage d'énergie configuré pour recevoir de l'énergie régénérative du second variateur de fréquence (34).

6. Système de gestion d'énergie d'ascenseur selon la revendication 5, dans lequel le dispositif de stockage d'énergie comprend une batterie et/ou un volant d'inertie.

7. Système de gestion d'énergie d'ascenseur selon une quelconque revendication précédente, dans lequel le au moins un dispositif de réception d'énergie (36) comprend au moins un composant de dissipation d'énergie.

8. Système de gestion d'énergie d'ascenseur selon la revendication 7, dans lequel le au moins un composant de dissipation d'énergie comprend une charge résistive.

9. Système de gestion d'énergie d'ascenseur selon une quelconque revendication précédente, dans lequel le second variateur de fréquence (34) est configuré pour fournir sélectivement de l'énergie électrique au premier variateur de fréquence (32).

10. Procédé (50) de gestion d'énergie dans un système d'ascenseur, le procédé comprenant :
la fourniture (52) d'énergie électrique à partir d'une source d'alimentation (38) à une machine d'ascenseur (30) par l'intermédiaire d'un premier variateur de fréquence (32) pendant une première condition de fonctionnement ;
la réception (54) d'énergie régénérative de la machine d'ascenseur (30) au niveau du premier variateur de fréquence (32) pendant une seconde condition de fonctionnement ;
la réception (56) au moins d'une partie de l'énergie régénérative du premier variateur de fréquence (32) au second variateur de fréquence (34) pendant la seconde condition de fonctionnement ; et
la fourniture (58) de l'énergie régénérative reçue par le second variateur de fréquence (34) à au moins un dispositif de réception d'énergie (36) couplé au second variateur de fréquence (34) ;
**caractérisé en ce que** le procédé comprend la communication entre le premier variateur de fréquence (32) et le second variateur de fréquence (34) pour fournir au second variateur de fréquence (34) une indication d'au moins une quantité d'énergie régénérative reçue par le premier variateur de fréquence (32) ou une quantité d'énergie régénérative à recevoir par le second variateur de fréquence (34) pendant la seconde condition de fonctionnement.

11. Procédé (50) selon la revendication 10, comprenant le contrôle d'une quantité d'énergie régénérative reçu par le second variateur de fréquence (34) selon l'indication de la quantité d'énergie régénérative à recevoir par le second variateur de fréquence (34).

12. Procédé (50) selon la revendication 10 ou 11, comprenant le contrôle de la quantité d'énergie régénérative reçue par le second variateur de fréquence (34) qui est inférieure à la quantité d'énergie régénérative reçue par le premier variateur de fréquence (32).

13. Procédé (50) selon l'une quelconque des revendications 10 à 12, comprenant la fourniture sélective d'énergie électrique par l'intermédiaire du second variateur de fréquence (34) au premier variateur de fréquence (32).
